# EUROPEAN PATENT SPECIFICATION

(11) **EP 3 584 476 B1**
(45) Date of publication and mention of the grant of the patent: **19.11.2025**
(21) Application number: 19178875.1
(22) Date of filing: 06.06.2019
(51) Int. Cl.: F16K 11/044, F16K 27/02, F16K 31/04

(54) **DRIVE SYSTEM FOR SWITCHABLE WATER VALVES**
ANTRIEBSSYSTEM FÜR SCHALTBARE WASSERVENTILE
SYSTÈME D'ENTRAÎNEMENT POUR SOUPAPES D'EAU COMMUTABLES

(30) Priority: 20.06.2018 DE 202018103479 U
(43) Date of publication of application: 25.12.2019
(73) Proprietor: Johnson Electric International AG, 3280 Murten (CH)
(72) Inventor: Barthel, Daniel Gerhard, Hong Kong Shatin, N.T. (HK); Schafer, Simone, Hong Kong Shatin, N.T. (HK)
(74) Representative: Hocking, Adrian Niall

(56) References cited:
- EP-A1- 3 032 151
- EP-A2- 0 941 968
- WO-A1-2005/056326
- DE-A1- 102008 054 330
- DE-B- 1 193 327
- DE-T2- 69 718 317
- JP-A- 2010 007 725
- JP-A- H11 294 420
- KR-A- 20160 050 711
- US-A- 3 329 165
- US-A1- 2005 062 006
- US-A1- 2010 126 598
- US-A1- 2010 323 229

## Description

### FIELD OF THE INVENTION

The invention relates to a drive system for switchable water valves for use in heating appliances and water heaters, in particular for two-way or three-way water valves.

### BACKGROUND OF THE INVENTION

In domestic heating appliances or water heaters, in particular in the field of gas-fuelled boilers, a variety of different valve types are known which interrupt and, as needed, redirect the water flow for water circuits. Generally, the valves are fully open or fully closed. Preferably, electromechanically actuated two-way valves or three-way valves are used here. These valves must be designed such that inside them there is no significant pressure drop during water flow and leakage can be reliably excluded in the valve area within the water circuits over the whole temperature range in which they are operated. To be able to avoid leakage, elastically deformable materials are used as sealing bodies, on which a specific pressure force must then be exerted so that the material can be deformed within specific limits in order to ensure the required tightness over extended periods despite multiple switching cycles. On the other hand, the forces acting on the valve body should not be too large because this involves high energy consumption. The electromechanical drives should thus not be dimensioned too large to be able to use cost-efficient drives which can be replaced quickly in the case of damage. Suitable drives are generally actuators which perform a linear movement, i.e. a stroke movement. Since these are mass products, even small savings result in big economic effects.

A mixing valve according to the three-way principle with a cylindrical valve closure, which is guided in a bush in a linearly moveable manner, is known from DE 20 2011 004 422 U1. In this valve, the cylindrical valve body is disposed in a mixing chamber such that it shuts off or opens variable proportions of the cross-section of two inlet pipes. An electric stepper motor is disposed as a drive for the valve body, wherein an additional decoupling element is interposed between the drive and the valve shaft in order to relieve the stepper motor and the valve shaft of the mechanical load of acting axial forces. This design is costly due to the great number of components and is difficult to be manufactured automatically in large series because what matters here is the precise fit of the individual valve components relative to each other and the precise seating of the valve spool.

DE 687 18317 T2 describes a somewhat more spherical sealing body, which offers an improved valve arrangement for heating systems and water heaters with greater leakproof capacity. As a driving device, a linear actuator device is disposed here, which is exactly positioned by means of a baseplate which in turn is axially bolted to the valve body. The disadvantage of this solution is the relatively long travel path for the sealing body because it must be displaced quite a long way into the cylindrical sealing surfaces of the valve seats and as far until the central side ring (sealing ring) can produce its effect. To replace the drive unit in case of malfunction, the housing must be removed first to be able to replace the electric motor; for doing so, the valve rod must also be removed from the clevis. This is relative time-consuming. Furthermore, this solution is characterized by the use of expensive materials and the relatively complex manufacture of the sealing body, i.e. manufacture is hard to automate.

An electromechanically operated three-way valve with two valve seats is known from DE 10 2012 219 745 A1, wherein a single valve seal is disposed to be moved towards a valve seat with a minimal area to seal it appropriately. The sealing surfaces of the valve body are tapered such that the sealing body lies flat against them. The valve stem is smaller in diameter than the inner diameter of the valve body. This has the advantage that only the areas lying against the valve surfaces are stressed. The sealing body is guided axially at two opposite points inside the valve body by means of two valve stems so that it cannot cant or lie against the engaged valve seat in an off-centre position, i.e. in a slantwise manner. The one end of the valve stem projecting from the valve body is coupled with a linear actuator which is designed as an electromagnetic actuator and which is acted upon by a separate electronic control module controlled by a program. This solution is also constructively complex. Other examples of valve arrangements known in the art are provided in US3329165A, DE1193327B, DE102008054330A1, and US2010323229A1

### SUMMARY OF THE INVENTION

The object of the invention is to create a drive system for switchable water valves for use in heating appliances and water heaters which is constructively simple, consists of very few components with minimal material usage, can be mounted very fast in an automated way, can be demounted and refitted fast and easily in the case of damage in any valve position and has a long service life.

The object is achieved by the characteristics of the first patent claim, according to the invention. Further purposeful designs of the invention are the object of the further dependent claims 2 to 7. The drive system for switchable water valves for a two-way or three-way water valve is designed with a linear stepper motor drive, as usual. This linear stepper motor is disposed outside at a cartridge, which is inserted into a valve body and seal-connected to it. The linear displacement of a complete sealing body is effected by a valve actuating rod, which is guided through the cartridge in a specially sealed manner. The sealing body is disposed directly on the valve actuating rod and joined to it. Generally, it is overmoulded on the valve actuating rod. However, it can also be shrink-fitted as a separate component, e.g. on the valve actuating rod, or be disposed in any other way, such as connected in a mechanically displaceable manner. The linear stepper motor is designed with a spindle-nut system inside so that the rotatory movement of the motor shaft is converted into a linear movement. A shaft-like extension of the spindle-nut system of the linear stepper motor, which is guided to the outside through the motor flange, is coupled with the valve actuating rod at a disengageable coupling point (here e.g. by means of a ball-and-socket joint). The sealing body is pressed into and held in its sealing position by the self-locking construction type and working principle of the spindle-nut system in conjunction with the linear stepper motor. At the drive end, the cartridge has at least one cartridge tab disposed on it. The motor flange of the linear stepper motor has at least one motor tab disposed on it such that its position can be brought into alignment with the cartridge tab(s). These two tabs and are constructively matched. During assembly, the motor tab(s) are firmly connected with the cartridge tab(s). Preferably, these can be bolted together so that the linear stepper motor is firmly and non-rotatably mechanically coupled to the cartridge and thus to the valve body. If the linear stepper motor is to be replaced quickly in case of motor damage, the fastening elements between the cartridge tab(s) and the motor tab(s) of the motor flange are to be removed. If the linear stepper motor is defective, the connection between the drive motor and the sealing body must be relaxed as is usual in the state of the art. To date, this has been done in such a way that the linear stepper motor is demounted together with the whole cartridge and the sealing body coupled to it. Removal of the cartridge means, however, that the hot water circuit needs to be opened, i.e. the water circuit system must first be depressurized in an adequate manner before the defective drive motor can be replaced. This involves a considerable effort and is time-consuming.

It is a considerable advantage if the current valve position can be maintained, i.e. the sealing body can remain in its position and the water circuit can remain closed. The valve thus remains pressurized. According to the invention, the cartridge has at least one, i.e. one, two or more, cartridge slot(s) as (a) recessed area(s) in the cartridge rim at the cartridge tab(s). In addition, the motor flange has at least one motor flange slot as (a) recessed area(s) in the motor flange rim at the motor tab(s). If the linear stepper motor is twisted as far as to bring the cartridge slot(s) and the motor flange slot(s) into alignment, the linear stepper motor can be pushed to some extent into the cartridge, i.e. the connection between the motor and the sealing body relaxes. Then the coupling point can be disengaged by moving the linear stepper motor out of the coupling point by an appropriate sideward movement. This preserves the position of the sealing body in the interior of the valve because the fluid pressure applied inside fixes the sealing body in its respective position. The defective linear stepper motor can now be removed axially, a new drive unit can be slipped in, the coupling point can be re-engaged and the whole system can be retightened by twisting. In doing so, the motor tab(s) are again brought into alignment with the cartridge tab(s) and connected to them in an adequate manner. Instead of the slots and, it is also possible to design the cartridge tab(s) and the motor tab(s) such that the linear motor is easily movable relative to the cartridge after the alignment of the tabs is released. This is the case if the cartridge tab(s) extends beyond the cartridge rim and is higher than the circular cartridge rim. The end face of the motor flange and the end face of the motor tab(s) are then in the same plane. Conversely, if the motor tab(s) extend beyond the motor flange rim and are higher than the circular motor flange rim, the end faces of the cartridge tab and the end face of the cartridge rim can be in the same plane. When the linear stepper motor is pushed in the direction of and to some extent into the cartridge after the linear stepper motor being twisted to a release of the alignment of the at least one cartridge tab and the at least one motor tab relative to the cartridge, the coupling point relaxes to disengage the coupling point at the time of the removing of the linear stepper motor. Due to this constructive design, fast replacement of a defective linear stepper motor is easy and is possible with just a few manipulations.

An embodiment of the drive system for switchable water valves is cost-efficient and easiest to handle if two cartridge tabs are disposed on the cartridge. Equally, two motor tabs are then disposed on the motor flange. The cartridge has one cartridge slot each between the cartridge tabs in the cartridge rim and the motor flange has two motor flange slots disposed between the motor tabs in the motor flange rim. By simply twisting by 90 degrees, the two slots and are brought into alignment and the linear stepper motor is relaxed and can be replaced quickly in the case of damage. The tabs and are preferably disposed in an exactly opposite position (180 degrees).

It is particular advantageous if, in the novel drive system for switchable water valves, one or two cartridge tab ramps per cartridge slot are disposed at the cartridge rim as a transition between the cartridge tab and the cartridge slot. When the linear stepper motor is twisted relative to the cartridge, depending on the twist direction, this produces an even smooth relaxation when demounting and even tightening when mounting.

In a particular embodiment of the drive system for switchable water valves, the connections between the cartridge tab(s) and the motor tab(s) can also be designed such that the cartridge tab(s) and the motor tab(s) are connected to each other by a bayonet-type locking mechanism.

In principle, it is also possible that, in the drive system for switchable water valves, the cartridge tab(s) and the motor tab(s) are designed with matching threads and these are connected to each other by means of a thread-type locking mechanism.

The advantage of the drive system according to the invention for switchable water valves for use in heating appliances and water heaters is that it is constructively very simple and consists of very few components. This allows its fast and automated manufacture and easy repair in case of motor damage. Moreover, it has such a sealing effect that in this type of water valves, to which pressures up to bar and more are permanently applied, no leakage occurs in both valve positions over a long time when it is used in a two-way or three-way water valve and also when the drive motor is replaced. Moreover, due to the constructive design as compared with previous comparable water valves, the flow resistance is reduced further. The travel path of the valve actuating rod with the two sealing rings can also be shortened since the axial swelling of the sealing rings could also be shortened. Moreover, material usage is reduced so that, in total, the economy of such a water valve improves. In particular, this results in the fact that the linear stepper motor needs a lower energy consumption and can be designed differently from comparable drives for water valves of the same type. With the drive system according to the invention, it is also possible to operate at the same or higher contact pressures of the sealing body against the sealing surfaces of the valve body.

### BRIEF DESCRIPTION OF THE DRAWINGS

A preferred embodiment of the invention will now be described, by way of example only, with reference to figures of the accompanying drawings. In the figures, identical structures, elements or parts that appear in more than one figure are generally labeled with a same reference numeral in all the figures in which they appear. Dimensions of components and features shown in the figures are generally chosen for convenience and clarity of presentation and are not necessarily shown to scale.
Fig 1: shows a sectional view through a complete two-way water valve having a valve body, sealing body, valve actuating rod, coupling point and coupled linear stepper motor,
Fig 2: shows an oblique view of a drive system with two opposite cartridge tabs and two motor tabs, which are bolted to each other,
Fig 3: shows an oblique view of a drive system in a position of the linear stepper motor twisted by 90 degrees relative to the cartridge.

### DETAILED DESCRIPTION OF THE PREFERRED EMBODIMENTS

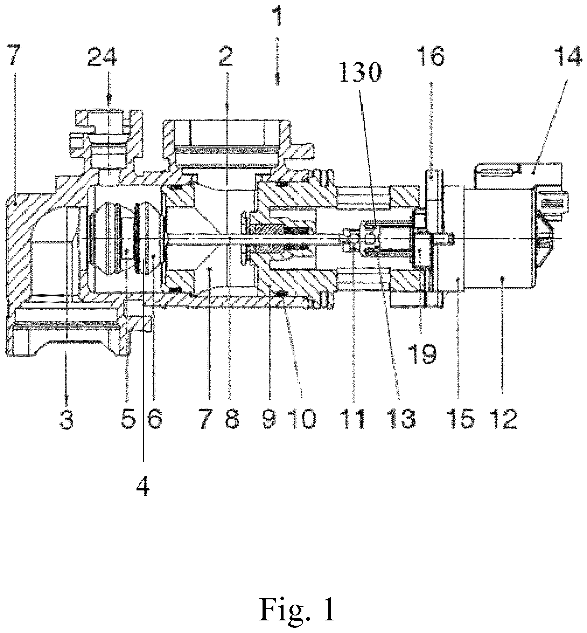

**Fig. 1** shows a sectional view of a complete novel two-way water valve 1 having a valve body 7 with an inlet 2 and an outlet 3. The valve body 7 has a sealing body 4 disposed in it, a valve actuating rod 8 firmly coupled to the sealing body, a coupling point 11 with the coupling piece 13 and a thereby coupled linear stepper motor 12. The complete sealing body 4 consists of a sealing body main part 5 with two press-fitted sealing rings 6 and the coupled valve actuating rod 8. Here, the sealing body main part 5 is configured as a one-piece injection-moulded part and, already during injection moulding, the valve actuating rod 8 is directly overmoulded and thus firmly joined to the sealing body main part 5 in the same operation.

At the coupling point 11, the valve actuating rod 8 is coupled to the linear stepper motor 12 by means of a coupling piece 13 and a ball-and-socket joint engaged in it. Instead of a separate coupling piece 13, the end of the linear stepper motor shaft can be designed with a suitable integral coupling mechanism. The sealing body main part 5 can optionally also be coupled with the valve actuating rod 8 by a separable connection, e.g. by means of a ball-and-socket joint. Since the small sealing rings 6 of the O-ring type swell less than previously known larger sealing bodies, the linear stepper motor 7 must travel fewer steps at the stop to ensure tightness, i.e. the two-way valve 1 can be switched faster. The drive of the two-way valve 1 consists of a system with the linear stepper motor 12 and a spindle-nut system (not shown in the drawing) disposed inside, which is designed to be self-locking so that the required contact pressure of the sealing rings 6 to the sealing areas of the valve body 7 at rest is reliably ensured. The valve body 7 has a cartridge 9 fitted into it, wherein two cartridge sealing rings 10 are disposed between the inner surface of the valve body 7 and the outer surface of the cartridge 9 for sealing. At the end of the cartridge 9, two cartridge tabs 19 are symmetrically formed opposite each other. At the axial end, the linear stepper motor 12 is mounted by means of its motor flange 15. Two motor tabs 16 which are also symmetrically formed on the motor flange 15 opposite each other are used for fastening. The cartridge tabs 19 and the motor tabs 16 are shaped and positioned such that they can be brought into alignment. In this aligned position, they are bolted together. The housing of the linear stepper motor 12 has a motor terminal connector piece 14 disposed on and fastened to it, which is used to supply the energy and to which any relevant control lines can be connected by means of a suitable connector. The valve body 7 also has a sensor opening 24 which can optionally be used to determine various measurement values if needed. This sensor opening 24 can, however, also be closed and have no function.

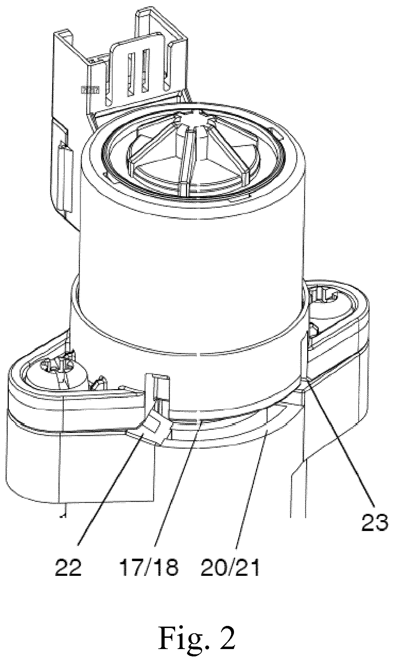

**Fig.** 2 is an oblique view of a drive system with two opposite cartridge tabs 19 disposed on the cartridge 9 and two motor tabs 16. The cartridge tabs 19 and the motor tabs 16 are in alignment and bolted together. On one side of each cartridge tab 19, starting at the level of the cartridge tab end face, a cartridge tab ramp 22 is disposed in the direction of the cartridge slot 21 in the cartridge rim 20. The cartridge slot 21 is recessed relative to the level of the cartridge tab end face by a defined dimension so that a recess is formed in the cartridge rim 20. There may also be two cartridge tab ramps 22 per cartridge tab 19, i.e. one on each side of the cartridge tab 19. The motor flange 15 also has two motor flange slots 18 disposed in it so that the motor flange rim 17 is also recessed between the motor tabs 16. The total depth of the two slots 18 and 21 must be large enough to allow easy relaxation of the coupling point 11 and demounting of the linear stepper motor 12. This dimension is determined by the construction size of the valve concerned and the design and type of the coupling point 11. Instead of the cartridge tab ramps 22, the ramps can also be formed analogously on the motor flange 15 as motor flange ramps. In principle, ramps may be formed both on the cartridge 9 and on the motor flange 15, which however has no further advantages. The screw connections must be loosened first before twisting the linear stepper motor 12.

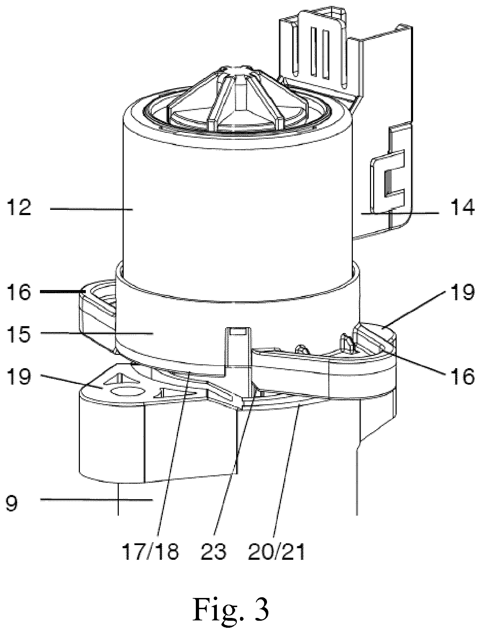

**Fig. 3** shows an oblique view of a drive system in a position of the linear stepper motor 12 twisted by about 90 degrees relative to the cartridge 9. In this twisted position, the liner stepper motor 12 can now be pushed in the direction of and to some extent into the cartridge, whereby the coupling point 11 relaxes. Although, in the relaxed position, the sealing body 4 with its sealing ring 6 is no longer pressed against the engaged sealing surface of the two-way valve 1 as a result of its tightened state, the sealing body 4 is pressed against the sealing surface by the fluid pressure applied inside the valve body 7 and no leakage can form. Then the coupling point 11 can be disengaged by a slight sideward and tilting movement and the defective linear stepper motor 12 can be removed. Accordingly, the replacement motor can be refitted in reversed mounting order. Then the linear stepper motor 12 is twisted again relative to the cartridge 9. In doing so, the motor tabs 16 move towards the cartridge tab ramps 22, the linear motor 12 is pulled out of the cartridge 9 and the drive system is again tightened relative to the two-way valve 1. When the cartridge tabs 19 are in precise alignment with the motor tabs 16, the screw connection is made, the linear stepper motor 12 is electrically connected through the motor terminal connector piece 14 and the two-way valve 1 is again ready for operation.

The object of the invention is to create a drive system for switchable water valves for use in heating appliances and water heaters which is constructively simple, consists of very few components with minimal material usage, can be mounted very fast in an automated way, can be demounted and refitted fast and easily in the case of damage in any valve position and has a long service life.

The object is achieved by the characteristics of the first patent claim, according to the invention. Further purposeful designs of the invention are the object of the further dependent claims. The drive system for switchable water valves for a two-way or three-way water valve 1 is designed with a linear stepper motor drive, as usual. This linear stepper motor 12 is disposed outside at a cartridge 9, which is inserted into a valve body 7 and seal-connected to it. The linear displacement of a complete sealing body 4 is effected by a valve actuating rod 8, which is guided through the cartridge 9 in a specially sealed manner. The sealing body 4 is disposed directly on the valve actuating rod 8 and joined to it. Generally, it is overmoulded on the valve actuating rod 8. However, it can also be shrink-fitted as a separate component, e.g. on the valve actuating rod 3, or be disposed in any other way, such as connected in a mechanically displaceable manner. The linear stepper motor 12 is designed with a spindle-nut system inside so that the rotatory movement of the motor shaft is converted into a linear movement. A shaft-like extension of the spindle-nut system of the linear stepper motor 12, which is guided to the outside through the motor flange 15, is coupled with the valve actuating rod 8 at a disengageable coupling point 11 (here e.g. by means of a ball-and-socket joint). The sealing body 4 is pressed into and held in its sealing position by the self-locking construction type and working principle of the spindle-nut system in conjunction with the linear stepper motor 12. At the drive end, the cartridge 9 has at least one cartridge tab 19 disposed on it. The motor flange 15 of the linear stepper motor 12 has at least one motor tab 16 disposed on it such that its position can be brought into alignment with the cartridge tab(s) 19. These two tabs 19 and 16 are constructively matched. During assembly, the motor tab(s) 16 are firmly connected with the cartridge tab(s) 19. Preferably, these can be bolted together so that the linear stepper motor 12 is firmly and non-rotatably mechanically coupled to the cartridge 9 and thus to the valve body 7. If the linear stepper motor 12 is to be replaced quickly in case of motor damage, the fastening elements between the cartridge tab(s) 19 and the motor tab(s) 16 of the motor flange 15 are to be removed. If the linear stepper motor 12 is defective, the connection between the drive motor and the sealing body must be relaxed as is usual in the state of the art. To date, this has been done in such a way that the linear stepper motor is demounted together with the whole cartridge and the sealing body coupled to it. Removal of the cartridge 9 means, however, that the hot water circuit needs to be opened, i.e. the water circuit system must first be depressurized in an adequate manner before the defective drive motor can be replaced. This involves a considerable effort and is time-consuming.

It is a considerable advantage if the current valve position can be maintained, i.e. the sealing body 4 can remain in its position and the water circuit can remain closed. The valve thus remains pressurized. According to the invention, the cartridge 9 has at least one, i.e. one, two or more, cartridge slot(s) 21 as (a) recessed area(s) in the cartridge rim 20 at the cartridge tab(s) 19. In addition, the motor flange 15 has at least one motor flange slot 18 as (a) recessed area(s) in the motor flange rim 17 at the motor tab(s) 16. If the linear stepper motor 12 is twisted as far as to bring the cartridge slot(s) 21 and the motor flange slot(s) 18 into alignment, the linear stepper motor 12 can be pushed to some extent into the cartridge 9, i.e. the connection between the motor and the sealing body relaxes. Then the coupling point 11 can be disengaged by moving the linear stepper motor 12 out of the coupling point 11 by an appropriate sideward movement. This preserves the position of the sealing body 4 in the interior of the valve because the fluid pressure applied inside fixes the sealing body 5 in its respective position. The defective linear stepper motor 12 can now be removed axially, a new drive unit can be slipped in, the coupling point 11 can be re-engaged and the whole system can be retightened by twisting. In doing so, the motor tab(s) 16 are again brought into alignment with the cartridge tab(s) 19 and connected to them in an adequate manner. Instead of the slots 18 and 21, it is also possible to design the cartridge tab(s) and the motor tab(s) such that the linear motor is easily movable relative to the cartridge 9 after the alignment of the tabs is released. This is the case if the cartridge tab(s) 19 extends beyond the cartridge rim 20 and is higher than the circular cartridge rim (20). The end face of the motor flange 15 and the end face of the motor tab(s) are then in the same plane. Conversely, if the motor tab(s) 16 extend beyond the motor flange rim 17 and are higher than the circular motor flange rim 17, the end faces of the cartridge tab 19 and the end face of the cartridge rim can be in the same plane. Due to this constructive design, fast replacement of a defective linear stepper motor 12 is easy and is possible with just a few manipulations.

An embodiment of the drive system for switchable water valves is cost-efficient and easiest to handle if two cartridge tabs 19 are disposed on the cartridge 9. Equally, two motor tabs 16 are then disposed on the motor flange 15. The cartridge 9 has one cartridge slot 21 each between the cartridge tabs 19 in the cartridge rim 20 and the motor flange 15 has two motor flange slots 18 disposed between the motor tabs 16 in the motor flange rim 17. By simply twisting by 90 degrees, the two slots 16 and 19 are brought into alignment and the linear stepper motor 12 is relaxed and can be replaced quickly in the case of damage. The tabs 16 and 19 are preferably disposed in an exactly opposite position (180 degrees).

It is particular advantageous if, in the novel drive system for switchable water valves, one or two cartridge tab ramps 22 per cartridge slot 21 are disposed at the cartridge rim 20 as a transition between the cartridge tab 19 and the cartridge slot 21. When the linear stepper motor 12 is twisted relative to the cartridge 9, depending on the twist direction, this produces an even smooth relaxation when demounting and even tightening when mounting.

In a particular embodiment of the drive system for switchable water valves, the connections between the cartridge tab(s) 19 and the motor tab(s) 16 can also be designed such that the cartridge tab(s) 19 and the motor tab(s) 16 are connected to each other by a bayonet-type locking mechanism.

In principle, it is also possible that, in the drive system for switchable water valves, the cartridge tab(s) (19) and the motor tab(s) (16) are designed with matching threads and these are connected to each other by means of a thread-type locking mechanism.

The advantage of the drive system according to the invention for switchable water valves for use in heating appliances and water heaters is that it is constructively very simple and consists of very few components. This allows its fast and automated manufacture and easy repair in case of motor damage. Moreover, it has such a sealing effect that in this type of water valves, to which pressures up to 4 bar and more are permanently applied, no leakage occurs in both valve positions over a long time when it is used in a two-way or three-way water valve and also when the drive motor is replaced. Moreover, due to the constructive design as compared with previous comparable water valves, the flow resistance is reduced further. The travel path of the valve actuating rod 8 with the two sealing rings 6 can also be shortened since the axial swelling of the sealing rings 6 could also be shortened. Moreover, material usage is reduced so that, in total, the economy of such a water valve improves. In particular, this results in the fact that the linear stepper motor 12 needs a lower energy consumption and can be designed differently from comparable drives for water valves of the same type. With the drive system according to the invention, it is also possible to operate at the same or higher contact pressures of the sealing body 4 against the sealing surfaces of the valve body 17.

The technical solution described above is primarily usable in a novel universal maintenance-friendly drive system for switchable water valves for use in heating appliances and water heaters, specifically for two-way or three-way water valves.

In the description and claims of the present application, each of the verbs "comprise", "include", "contain" and "have", and variations thereof, are used in an inclusive sense, to specify the presence of the stated item or feature but do not preclude the presence of additional items or features.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of example only, and various other modifications will be apparent to persons skilled in the field without departing from the scope of the invention as defined by the appended claims.

## Claims

1. Drive system for switchable water valves, comprising a drive by means of a linear stepper motor (12) disposed at a cartridge (9) and a valve actuating rod (8) joined to a sealing body (4) disposed in a valve body (7), the linear stepper motor (12) has a spindle-nut system, the spindle-nut system of the linear stepper motor (12) is coupled to the valve actuating rod (8) at a coupling point (11) which is disengageable, the cartridge (9) has at least one cartridge tab (19) disposed on it, a motor flange (15) has at least one motor tab (16) disposed on it, the at least one cartridge tab (19) and the at least one motor tab (16) being connectable to each other when the at least one cartridge tab (19) and the at least one motor tab (16) are in alignment with one another, wherein the cartridge (9) has at least one cartridge slot (21) disposed in a cartridge rim (20) and the motor flange (15) has at least one motor flange slot (18) disposed in a motor flange rim (17), or the cartridge tab (19) extends beyond the cartridge rim (20) and is higher than the circular cartridge rim (20), or the motor tab (16) extends beyond the motor flange rim (17) and is higher than the circular motor flange rim (17); wherein when the linear stepper motor (12) is pushed in the direction of and to some extent into the cartridge (9) after the linear stepper motor (12) being twisted to a release of the alignment of the at least one cartridge tab (19) and the at least one motor tab (16) relative to the cartridge (9), the coupling point (11) relaxes to disengage the coupling point (11) at the time of the removing of the linear stepper motor (12).

2. Drive system for switchable water valves according to claim 1, **characterized in that** the cartridge (9) has two cartridge tabs (19) disposed on it, the motor flange (15) has two motor tabs (16) disposed on it, the cartridge (9) has two cartridge slots (21) in the cartridge rim (20) between the cartridge tabs (19) and the motor flange (15) has two motor flange slots (18) in the motor flange rim (17) between the motor tabs (16), or the two cartridge tabs (19) extend beyond the cartridge rim (20) and are higher than the circular cartridge rim (20) or the two motor tabs (16) extend beyond the motor flange rim (17) and are higher than the circular motor flange rim (17).

3. Drive system for switchable water valves according to claim 2, **characterized in that** one or two cartridge tab ramps (22) per cartridge slot (21) are disposed at the cartridge rim (20) as a transition between the cartridge tab (19) and the cartridge slot (21).

4. Drive system for switchable water valves according to claim 2, **characterized in that** one or two motor flange ramps (23) per motor flange slot (18) are disposed at the motor flange rim (17) as a transition between the motor tab (16) and the motor flange slot (18).

5. Drive system for switchable water valves according to claim 1 or 2, **characterized in that** the cartridge tab(s) (19) and the motor tab(s) (16) are connected by means of a bayonet-type locking mechanism.

6. Drive system for switchable water valves according to claim 1 or 2, **characterized in that** the cartridge tab(s) (19) and the motor tab(s) (16) are designed with matching threads and these are connected to each other by means of a thread-type locking mechanism.

7. Drive system for switchable water valves according to any one of claims 1 to 6, **characterized in that** the switchable water valve is a two-way valve or a three-way water valve (1).

## Patentansprüche

1. Antriebssystem für schaltbare Wasserventile, umfassend einen Antrieb mittels eines linearen Schrittmotors (12), der an einer Kassette (9) angeordnet ist, und einer Ventilbetätigungsstange (8), die mit einem Dichtungskörper (4) verbunden ist, der in einem Ventilkörper (7) angeordnet ist, wobei der linearer Schrittmotor (12) ein Spindel-Mutter-System aufweist, wobei das Spindel-Mutter-System des linearen Schrittmotors (12) an die Ventilbetätigungsstange (8) an einem Kopplungspunkt (11) gekoppelt ist, der ausrückbar ist, wobei die Kassette (9) mindestens eine darauf angeordnete Kassettenlasche (19) aufweist, wobei Motorflansch (15) mindestens eine darauf angeordnete Motorlasche (16) aufweist, wobei die mindestens eine Kassettenlasche (19) und die mindestens eine Motorlasche (16) miteinander verbindbar sind, wenn die mindestens eine Kassettenlasche (19) und die mindestens eine Motorlasche (16) aufeinander ausgerichtet sind, wobei die Kassette (9) mindestens einen Kassettenschlitz (21) aufweist, der in einem Kassettenrand (20) angeordnet ist, und der Motorflansch (15) mindestens einen Motorflanschschlitz (18) aufweist, der in einem Motorflanschrand (17) angeordnet ist, oder sich die Kassettenlasche (19) über den Kassettenrand (20) hinaus erstreckt und höher als der kreisförmige Kassettenrand (20) ist; oder sich die Motorlasche (16) über den Motorflanschrand (17) hinaus erstreckt und höher als der kreisförmige Motorflanschrand (17) ist; wobei, wenn der lineare Schrittmotor (12) in die Richtung der Kassette (9) und in gewissem Maße in diese gedrückt wird, nachdem der lineare Schrittmotor (12) zu einer Lösung der Ausrichtung der mindestens einen Kassettenlasche (19) und der mindestens einen Motorlasche (16) in Bezug auf die Kassette (9) gedreht wurde, sich der Kopplungspunkt (11) entspannt, um den Kupplungspunkt (11) zu der Zeit des Entfernens des linearen Schrittmotors (12) auszurücken.

2. Antriebssystem für schaltbare Wasserventile nach Anspruch 1, **dadurch gekennzeichnet, dass** die Kassette (9) zwei darauf angeordnete Kassettenlaschen (19) aufweist, der Motorflansch (15) zwei darauf angeordnete Motorlaschen (16) aufweist, die Kassette (9) zwei Kassettenschlitze (21) in dem Kassettenrand (20) zwischen den Kassettenlaschen (19) aufweist und der Motorflansch (15) zwei Motorflanschschlitze (18) in dem Motorflanschrand (17) zwischen den Motorlaschen (16) aufweist, oder sich die zwei Kassettenlaschen (19) über den Kassettenrand (20) hinaus erstrecken und höher als der kreisförmige Kassettenrand (20) sind oder sich die zwei Motorlaschen (16) über den Motorflanschrand (17) hinaus erstrecken und höher als der kreisförmige Motorflanschrand (17) sind.

3. Antriebssystem für schaltbare Wasserventile nach Anspruch 2, **dadurch gekennzeichnet, dass** eine oder zwei Kassettenlaschenrampen (22) pro Kassettenschlitz (21) an dem Kassettenrand (20) als ein Übergang zwischen der Kassettenlasche (19) und dem Kassettenschlitz (21) angeordnet sind.

4. Antriebssystem für schaltbare Wasserventile nach Anspruch 2, **dadurch gekennzeichnet, dass** eine oder zwei Motorflanschrampen (23) pro Motorflanschschlitz (18) an dem Motorflanschrand (17) als ein Übergang zwischen der Motorlasche (16) und dem Motorflanschschlitz (18) angeordnet sind.

5. Antriebssystem für schaltbare Wasserventile nach Anspruch 1 oder 2, **dadurch gekennzeichnet, dass** die Kassettenlasche(n) (19) und die Motorlasche(n) (16) mittels eines Verschlussmechanismus vom Bajonett-Typ verbunden werden.

6. Antriebssystem für schaltbare Wasserventile nach Anspruch 1 oder 2, **dadurch gekennzeichnet, dass** die Kassettenlasche(n) (19) und die Motorlasche(n) (16) mit zusammenpassenden Gewinden entworfen sind und diese mittels eines Verschlussmechanismus vom Gewindetyp miteinander verbunden werden.

7. Antriebssystem für schaltbare Wasserventile nach einem der Ansprüche 1 bis 6, **dadurch gekennzeichnet, dass** das schaltbare Wasserventil ein Zweiwegeventil oder ein Dreiwegewasserventil (1) ist.

## Revendications

1. Un système d'entraînement pour vannes d'eau commutables, comprenant un entraînement par moteur pas à pas linéaire (12) disposé sur une cartouche (9) et une tige d'actionnement de vanne (8) reliée à un corps d'étanchéité (4) disposé dans un corps de vanne (7), le moteur pas à pas linéaire (12) est équipé d'un système vis-écrou, le système vis-écrou du moteur pas à pas linéaire est accouplé à la tige d'actionnement de vanne (8) en un point d'accouplement (11) qui est débrayable, la cartouche (9) comporte au moins une languette de cartouche (19) disposée dessus, une bride de moteur (15) comporte au moins une languette de moteur (16) disposée dessus, la au moins une languette de cartouche (19) et la au moins une languette de moteur (16) pouvant être connectées l'une à l'autre lorsque la au moins une languette de cartouche (19) et la au moins une languette de moteur (16) sont alignées l'une avec l'autre, dans lequel, la cartouche (9) comporte au moins une fente de cartouche (21) disposée dans un bord de cartouche (20) et la bride de moteur (15), comporte au moins une fente de bride de moteur (18) disposée dans un bord de bride de moteur (17), ou la languette de cartouche (19) s'étend au-delà du bord de cartouche (20) et est plus haute que le bord circulaire de cartouche (20), ou la languette de moteur (16) s'étend au-delà du bord de bride de moteur (17) et est plus haute que le bord de bride de moteur circulaire (17) ; dans lequel lorsque le moteur pas à pas linéaire (12) est poussé dans la direction de et dans une certaine mesure dans la cartouche (9) après que le moteur pas à pas linéaire (12) a été tourné pour libérer l'alignement d'au moins une languette de cartouche (19) et d'au moins une languette de moteur (16) par rapport à la cartouche (9), le point d'accouplement (11) se relâche pour désengager le point d'accouplement (11) au moment du retrait du moteur pas à pas linéaire (12).

2. Le système d'entraînement pour vannes d'eau commutables selon la revendication 1, **caractérisé en ce que** la cartouche (9) comporte deux languettes de cartouche (19) disposées sur dessus, la bride de moteur (15) comporte deux languettes de moteur (16) disposées dessus, la cartouche (9) comporte deux fentes de cartouche (21) dans le bord de cartouche (20) entre les languettes de cartouche (19) et la bride de moteur (15) comporte deux fentes de bride de moteur (18) dans le bord de bride de moteur (17) entre les languettes de moteur (16), ou les deux languettes de cartouche (19) s'étendent au-delà du bord de cartouche (20) et sont plus hautes que le bord circulaire de cartouche (20) ou les deux languettes de moteur (16) s'étendent au-delà du bord de bride de moteur (17) et sont plus hautes que le bord circulaire de bride de moteur (17).

3. Le système d'entraînement pour vannes d'eau commutables selon la revendication 2, **caractérisé en ce qu'**une ou deux rampes de languette de cartouche (22) par fente de cartouche (21) sont disposées sur le bord de cartouche (20) comme transition entre la languette de cartouche (19) et la fente de cartouche (21).

4. Le système d'entraînement pour vannes d'eau commutables selon la revendication 2, **caractérisé en ce qu'**une ou deux rampes de bride de moteur (23) par fente de bride de moteur (18) sont disposées sur le bord de bride de moteur (17) comme transition entre la languette de moteur (16) et la fente de bride de moteur (18).

5. Le système d'entraînement pour vannes d'eau commutables selon la revendication 1 ou 2, **caractérisé en ce que** la ou les languettes de cartouche (19) et la ou les languettes de moteur (16) sont connectées au moyen d'un mécanisme de verrouillage à baïonnette.

6. Le système d'entraînement pour vannes d'eau commutables selon la revendication 1 ou 2, **caractérisé en ce que** la ou les languettes de cartouche (19) et la ou les languettes de moteur (16) sont conçues avec des filetages correspondants et sont connectées entre elles au moyen d'un mécanisme de verrouillage de type filetage.

7. Le système d'entraînement pour vannes d'eau commutables selon l'une quelconque des revendications 1 à 6, **caractérisé en ce que** la vanne d'eau commutable est une vanne à deux voies ou une vanne à trois voies (1).
